# EUROPEAN PATENT SPECIFICATION

(11) **EP 4 398 359 B1**
(45) Date of publication and mention of the grant of the patent: **25.02.2026**
(21) Application number: 23750520.1
(22) Date of filing: 29.03.2023
(51) Int. Cl.: H01M 10/04, B21D 5/16, B21D 43/00

(54) **BATTERY CELL PROCESSING DEVICE, BATTERY CELL PROCESSING METHOD, AND BATTERY PRODUCTION LINE**
ZELLVERARBEITUNGSAUSRÜSTUNG, ZELLVERARBEITUNGSVERFAHREN UND BATTERIEHERSTELLUNGSLINIE
DISPOSITIF DE TRAITEMENT D'ÉLÉMENT DE BATTERIE, PROCÉDÉ DE TRAITEMENT D'ÉLÉMENT DE BATTERIE ET LIGNE DE PRODUCTION DE BATTERIE

(30) Priority: 21.11.2022 CN 202211453858
(43) Date of publication of application: 10.07.2024
(73) Proprietor: Contemporary Amperex Technology (Hong Kong) Limited, Central, Central And Western District (HK)
(72) Inventor: PENG, Yuan, Fujian 352100 (CN); ZHENG, Zhijian, Fujian 352100 (CN); LIN, Gang, Fujian 352100 (CN); FAN, Xiang, Fujian 352100 (CN); HONG, Chang, Fujian 352100 (CN)
(74) Representative: Ziebig Hengelhaupt Intellectual Property Attorneys Patentanwaltskanzlei PartGmbB
(86) International application number: PCT/CN2023/084713
(87) International publication number: WO 2024/108841

(56) References cited:
- CN-A- 111 916 840
- CN-A- 115 036 579
- CN-A- 115 064 780
- CN-U- 208 368 654
- CN-U- 210 984 870
- US-A1- 2015 050 535

## Description

### TECHNICAL FIELD

This application relates to the technical field of power battery production equipment, and in particular, to cell processing equipment, a cell processing method, and a battery production line.

### BACKGROUND

In a process of preparing a power battery, different cells usually need to be folded together. A cell folding operation is to fit a large surface of a first cell closely with a large surface of a second cell, during which tabs of the first cell and the second cell are bent at an angle.

However, the tab bending manner in an existing structure is not only inefficient but also ensures no processing precision of the cells. Consequently, the tabs are prone to problems such as breakage and inconsistency after being bent, thereby eventually being detrimental to the overall production of the power battery. Document CN 115 064 780 A discloses the preamble of claim 1.

### SUMMARY

In view of the above problems, this application provides a piece of cell processing equipment according to claim 1, a cell processing method according to claim 9, and a battery production line according to claim 11 to effectively alleviate the problem of tab tearing during cell processing of a power battery.

According to a first aspect, this application provides a piece of cell processing equipment. The cell processing equipment includes: a first support assembly, configured to fix a cell body, where the first support assembly is able to rotate around a first rotation axis; a second support assembly, configured to fix the cell body, where the second support assembly is able to rotate around a second rotation axis, and the first rotation axis is disposed parallel to the second rotation axis; and a third support assembly, configured to fix a tab and an end cap. The third support assembly includes a support seat and a shaping piece.

The shaping piece is disposed movably relative to the support seat.

The cell processing equipment is movable relative to the support seat through the shaping piece. In this way, the shaping piece and the support seat constrain the first tab, the second tab, and the end cap from an upper side and a lower side respectively along the second direction, thereby avoiding displacement of the first tab and the second tab relative to the end cap during cell processing.

The cell processing equipment includes a fixing bracket. The first support assembly and the second support assembly are movably disposed on the fixing bracket along a first direction. The first support assembly and the second support assembly are arranged on two sides of the third support assembly respectively along the first direction. The third support assembly is movably disposed on the fixing bracket along a second direction. The second direction is perpendicular to the first direction.

In the above cell processing equipment, the first support assembly and the second support assembly are movably disposed along the first direction, and the third support assembly is movably disposed along the second direction, so that the cell processing equipment can perform distance compensation from the first direction and the second direction separately during cell processing, thereby effectively preventing the tearing of the first tab and the second tab.

The shaping piece moves away from the support seat when the first support assembly rotates around the first rotation axis to such a position that the first support assembly is located at a first preset angle to the fixing bracket and when the second support assembly rotates around the second rotation axis to such a position that the second support assembly is located at a second preset angle to the fixing bracket. An electrode post positioning groove is formed on the support seat.

In the above cell processing equipment, the shaping piece presses down on the first tab and second tab to implement shaping. The first tab and the second tab form stable fold lines along the edge of the shaping piece, thereby achieving high consistency of a first fold line and a second fold line, preventing unstable quality of cell processing, facilitating automatic production, and improving productivity. When the cell processing equipment switches from an intermediate state to a folded state, the shaping piece moves away from the support seat to avoid interference.

In some embodiments, the third support assembly includes a connecting plate and a driving unit. The connecting plate is movably disposed on the fixing bracket along the second direction. The support seat is fixed onto the connecting plate. The driving unit is drivingly connected to the shaping piece to drive the shaping piece to move relative to the connecting plate.

In the above cell processing equipment, the support seat is movable relative to the fixing bracket along the second direction to drive the entirety of the support seat and the shaping piece to move along the second direction, thereby forming a fixing space between the shaping piece and the support seat.

In some embodiments, the third support assembly includes two shaping pieces and two driving units. The two shaping pieces are located at two ends of the support seat respectively along a third direction. Each driving unit includes a horizontal driving piece and a vertical driving piece. The vertical driving piece is drivingly connected to the shaping piece to drive the shaping piece to reciprocate along the second direction. The horizontal driving piece is able to drive the shaping piece to reciprocate along the third direction. The third direction, the second direction, and the first direction are perpendicular to one another.

In the above cell processing equipment, the vertical driving piece drives the shaping piece to reciprocate relative to the connecting plate along the second direction. The horizontal driving piece drives the shaping piece to reciprocate relative to the connecting plate along the third direction. In this way, the shaping piece can firmly press down on the first tab and the second tab.

In some embodiments, the cell processing equipment includes a third driving mechanism fixedly connected to the fixing bracket. The third driving mechanism is drivingly connected to the connecting plate to drive the connecting plate to reciprocate relative to the fixing bracket along the second direction.

In some embodiments, the first support assembly includes a first rotator, a first fixing seat, and a first fixing plate. The first fixing plate is configured to fix the cell body. The first fixing seat is movably disposed on the fixing bracket along the first direction. The first fixing plate is rotatably connected to the first fixing seat. The first rotator is drivingly connected to the first fixing plate to drive the first fixing plate to rotate around the first rotation axis. The first support assembly is located at the first preset angle. A surface of the first fixing plate is disposed at an angle to the first direction and disposed at an angle to the second direction.

In some embodiments, the cell processing equipment includes a first driving mechanism. The first driving mechanism is drivingly connected to the first fixing seat to drive the first fixing seat to move along the first direction.

In some embodiments, the second support assembly includes a second rotator, a second fixing seat, and a second fixing plate. The second fixing plate is configured to fix the cell body. The second fixing seat is movably disposed on the fixing bracket along the first direction. The second fixing plate is rotatably connected to the second fixing seat. The second rotator is drivingly connected to the second fixing plate to drive the second fixing plate to rotate around the second rotation axis. The second support assembly is located at the first preset angle. A surface of the second fixing plate is disposed at an angle to the first direction and disposed at an angle to the second direction.

In some embodiments, the cell processing equipment includes a second driving mechanism. The second driving mechanism is drivingly connected to the second fixing seat to drive the second fixing seat to move along the first direction.

According to a second aspect, this application provides a cell processing method. The method includes a cell folding operation performed by using the cell processing equipment.

The cell processing method includes: fixing the cell body to the first support assembly and the second support assembly separately; rotating the first support assembly around the first rotation axis to a first folding angle, and concurrently, rotating the second support assembly around the second rotation axis to a second folding angle; and making the first support assembly and the second support assembly approach each other along the first direction, and making the third support assembly approach the first support assembly and the second support assembly along the second direction.

In some embodiments, the step of "rotating the first support assembly around the first rotation axis to a first folding angle, and concurrently, rotating the second support assembly around the second rotation axis to a second folding angle; and making the first support assembly and the second support assembly approach each other along the first direction, and making the third support assembly approach the first support assembly and the second support assembly along the second direction" includes: keeping the first support assembly and the second support assembly fixed to the third support assembly along the first direction when the first support assembly rotates from a first start angle to a first preset angle and the second support assembly rotates from a second start angle to a second preset angle; moving the shaping piece away from the support seat; and making the first support assembly and the second support assembly approach the third support assembly along the first direction and making the third support assembly approach the first support assembly and the second support assembly along the second direction when the first support assembly rotates from the first preset angle to the first folding angle and the second support assembly rotates from the second preset angle to the second folding angle.

According to a third aspect, this application provides a battery production line, including the cell processing equipment.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

### BRIEF DESCRIPTION OF DRAWINGS

By reading the following detailed description of exemplary embodiments, a person of ordinary skill in the art becomes clearly aware of various other advantages and benefits. The drawings are merely intended to illustrate the exemplary embodiments, but not intended to limit this application. In all the drawings, the same reference numeral represents the same component. In the drawings:
FIG. 1 is a status diagram of a power battery before a cell folding operation according to some embodiments of this application;
FIG. 2 is a status diagram of a power battery after a cell folding operation according to some embodiments of this application;
FIG. 3 is a schematic diagram of an assembling relationship between cell processing equipment and a power battery according to some embodiments of this application, where the cell processing equipment is in a start state, a first support assembly is located at a first start angle, and a second support assembly is located at a second start angle;
FIG. 4 is a schematic structural diagram of cell processing equipment according to some embodiments of this application, where the cell processing equipment is in a start state, a first support assembly is located at a first start angle, and a second support assembly is located at a second start angle;
FIG. 5 is a schematic diagram of an assembling relationship between cell processing equipment and a power battery according to some embodiments of this application, where the cell processing equipment is in an intermediate state, a first support assembly is located at a first preset angle, and a second support assembly is located at a second preset angle;
FIG. 6 is a schematic diagram of an assembling relationship between cell processing equipment and a power battery according to some embodiments of this application, where the cell processing equipment is in a folded state, a first support assembly is located at a first folding angle, and a second support assembly is located at a second folding angle;
FIG. 7 is a schematic structural diagram of cell processing equipment according to an embodiment of this application, where the cell processing equipment is in a folded state, a first support assembly is located at a first folding angle, and a second support assembly is located at a second folding angle;
FIG. 8 is a schematic diagram of an assembling mechanism shown in FIG. 3 from a viewing angle without showing the first support assembly and the second support assembly;
FIG. 9 is a schematic diagram of the structure shown in FIG. 8 from another viewing angle;
FIG. 10 is a schematic diagram of an assembling mechanism shown in FIG. 6 from a viewing angle without showing the first support assembly and the second support assembly;
FIG. 11 is a schematic diagram of the structure shown in FIG. 10 from another viewing angle without showing the fixing bracket;
FIG. 12 is an assembling drawing of a first support assembly and a first driving mechanism according to an embodiment of this application;
FIG. 13 is an assembling drawing of a second support assembly and a second driving mechanism according to an embodiment of this application;
FIG. 14 is a flowchart of a cell processing method according to an embodiment of this application; and

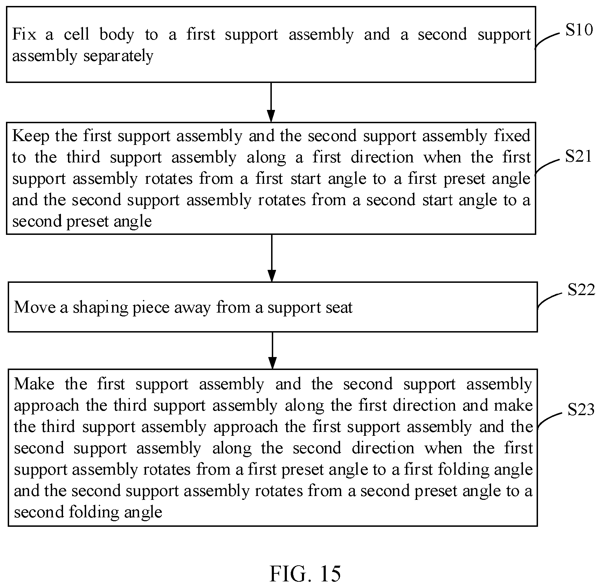

FIG. 15 is a flowchart of a cell processing method according to another embodiment of this application.

In the drawing, the front-rear direction indicated by X is a first direction, the up-down direction indicated by Z is a second direction, and the left-right direction indicated by Y is a third direction.

List of reference numerals:
First support assembly 100; first rotator 110; first fixing seat 120; first fixing plate 130; second support assembly 200; second rotator 210; second fixing seat 220; second fixing plate 230; third support assembly 300; support seat 310; electrode post positioning groove 311; shaping piece 320; fixing space 330; connecting plate 340; driving unit 350; horizontal driving piece 351; vertical driving piece 352; fixing bracket 400; first driving mechanism 510; second driving mechanism 520; third driving mechanism 530; first cell 910; first cell body 911; first tab 912; second cell 920; second cell body 921; second tab 922; end cap 930.

### DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application.

The terms used herein are merely intended to describe specific embodiments but not to limit this application. The terms "include" and "contain" and any variations thereof used in the specification, claims, and brief description of drawings of this application are intended as non-exclusive inclusion.

In the description of the embodiments of this application, the technical terms "first" and "second" are merely intended to distinguish between different items but not intended to indicate or imply relative importance or implicitly specify the number of the indicated technical features, specific order, or order of precedence. In the description of the embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of this application, unless otherwise expressly specified and defined, the technical terms such as "mounting", "concatenation", "connection", and "fixing" need to be understood in a broad sense, for example, understood as a fixed connection or a detachable connection or integrally formed; or understood as a mechanical connection or an electrical connection; understood as a direct connection, or an indirect connection implemented through an intermediary; or understood as internal communication between two components or interaction between two components. A person of ordinary skill in the art can understand the specific meanings of the terms in the embodiments of this application according to specific situations.

Currently, as can be seen from the market trend, the application of power batteries is increasingly extensive. Power batteries are not only used in energy storage power systems such as hydro, thermal, wind, and solar power stations, but also widely used in electric means of transport such as electric bicycles, electric motorcycles, and electric vehicles, and used in many other fields such as aerospace. The market demand for power batteries keeps soaring with the increase of the application fields of the power batteries.

During preparation of a power battery, cell processing is usually performed. To be specific, two bare cells are folded together by using cell processing equipment.

A cell folding operation is to connect and then fold two or more electrode assemblies. The electrode assemblies may be connected by welding such as ultrasonic welding and laser welding. In this way, the tabs of two or more electrode assemblies are connected to an end cap, and then the electrode assemblies and the end cap are positioned by using special-purpose cell processing equipment. Subsequently, the electrode assemblies are rotated gradually so that the tabs can bend and fit closely with an end face of the electrode assemblies, thereby fitting the two electrode assemblies closely together to facilitate subsequent assembling.

The applicant hereof is aware that a tab on each electrode assembly is made of a multi-layer metal foil. During a cell folding operation, when the cell processing equipment drives the two bare cells to rotate, a distance between the electrode assembly and a rotation axis changes, thereby resulting in a change in a distance between the bare cell and the end cap. When the distance changes, fold lines formed on a plurality of layers of metal foil of the tab become inconsistent, so that a joint between the tab and the end cap is pulled and torn to cause defects such as tab tearing.

To alleviate the tab tearing problem in a cell folding process, the applicant finds through research that, by disposing a shaping piece, the tabs can be shaped during the cell folding operation to form uniform fold lines and avoid inconsistent fold lines formed by a plurality of metal foil layers, and in turn, prevent the tabs from being torn by the bend, and avoid defects such as tab tearing. In addition, the support assembly on the processing equipment may be movably disposed on the fixing bracket, so that the distance from the tab to the end cap can be adjusted in time during cell folding to avoid tab tearing caused by excessive distance changes.

The cell processing equipment disclosed herein can perform a cell folding operation on a power battery. The power battery may be, but not limited to, a secondary battery or primary battery. In some other embodiments, the power battery may be a lithium-sulfur battery, a sodium-ion battery, or a magnesium-ion battery, without being limited herein.

It is hereby noted that the power battery disclosed herein typically includes two interconnected electrode assemblies. The cell processing equipment according to an embodiment of this application can perform a cell folding operation on the two electrode assemblies. In some other embodiments, the power battery may include three or more interconnected electrode assemblies, and accordingly, the cell processing equipment according to an embodiment of this application can perform a cell folding operation on the three or more electrode assemblies.

In an example described below, the power battery includes two interconnected electrode assemblies.

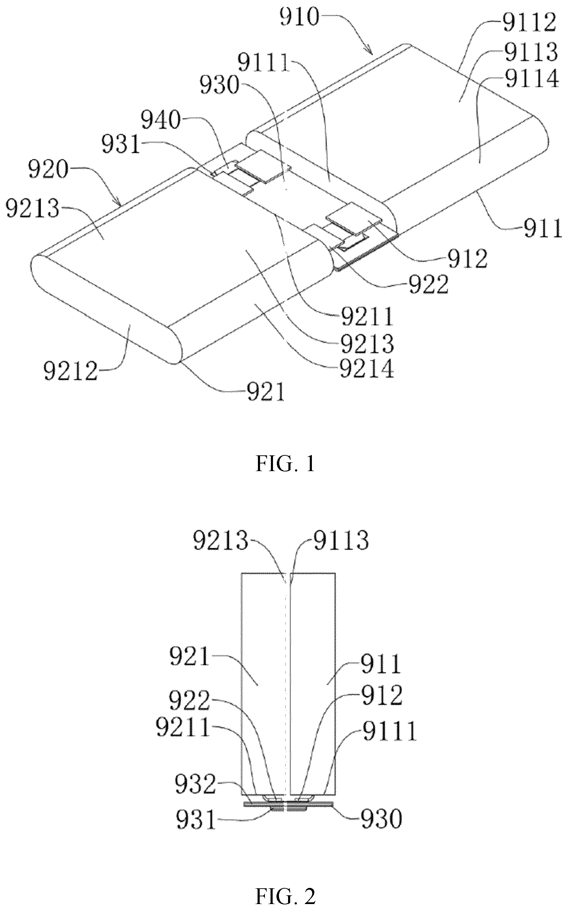

Referring to FIG. 1, FIG. 1 is a status diagram of a power battery before a cell folding operation. The power battery includes a first cell 910, a second cell 920, an end cap 930, a housing (not shown), and other functional components (not shown).

The end cap 930 is a component that fits and covers the opening of the housing to isolate the internal environment of the power battery from the external environment. Without limitation, the shape of the end cap 930 may be adapted to the shape of the housing to fit the housing. In some embodiments, the end cap 930 may be made of a material of appropriate hardness and strength (such as aluminum alloy), thereby making the end cap 930 not prone to deform in a case of being pressed or impacted, and improving the structural strength and safety performance of the power battery. Functional components such as an electrode post 931 may be disposed on the end cap 930. The electrode post 931 may be configured to be electrically connected to the first cell 910 and the second cell 920 to output or input electrical energy of the power battery.

In some embodiments, a pressure relief mechanism (not shown) such as a pressure relief valve, configured to release an internal pressure when the internal pressure or temperature of the power battery reaches a threshold, may be further disposed on the end cap 930. The end cap 930 may also be made of a variety of materials such as copper, iron, aluminum, stainless steel, aluminum alloy, or plastic, without being particularly limited herein. In some embodiments, an insulator 932 may be further disposed on an inner side of the end cap 930. The insulator 932 may be configured to isolate an electrically connected component in the housing from the end cap 930 to reduce short-circuit risks. For example, the insulator 932 may be plastic, rubber, or the like.

The housing is a component configured to fit the end cap 930 to form an internal environment of the power battery. The formed internal environment may be used to accommodate the first cell 910 and the second cell 920, an electrolytic solution, and other components. The housing and the end cap 930 may be stand-alone components. An opening may be made on the housing. At the opening, the end cap 930 covers and fits the opening to form the internal environment of the power battery. The housing may vary in shape and size. For example, the housing is cuboidal, cylindrical, hexagonal prismatic, or the like. The shape of the housing may be determined depending on the specific shape and size of the first cell 910 and the second cell 920. The housing may be made of a variety of materials such as copper, iron, aluminum, stainless steel, aluminum alloy, or plastic, without being particularly limited herein.

The structures of the first cell 910 and the second cell 920 are usually identical. The first cell 910 and the second cell 920 are components that react electrochemically in the power battery. Specifically, in an embodiment of this application, the first cell 910 and the second cell 920 are electrode assemblies. Generally, each electrode assembly is formed by winding or stacking a positive electrode plate and a negative electrode plate, and a separator is disposed between the positive electrode plate and the negative electrode plate. The parts, coated with an active material, of the positive electrode plate and the negative electrode plate, constitute a body portion of the electrode assembly. The part, coated with no active material, of the positive electrode plate and the negative electrode plate separately, constitutes a tab. Specifically, in an embodiment of this application, the tabs are a first tab 912 of the first cell 910 and a second tab 922 of the second cell 920. Each electrode assembly usually includes two tabs. During charging and discharging of the power battery, the positive active material and the negative active material react with an electrolytic solution. Used as a positive electrode and a negative electrode that output electrical energy respectively, the two tabs are connected to the two electrode posts 931 respectively. The electrode post 931 connected to the positive tab serves as a positive electrode of the power battery, and the electrode post 931 connected to the negative tab serves as a negative electrode of the power battery, so as to form a current circuit. The positive tab and the negative tab are usually located on the end face of the cell body, or may be located at two ends of the cell body respectively.

According to some embodiments of this application, referring to FIG. 1, the end cap 930 is disposed between the first cell 910 and the second cell 920, and electrically connects the two cells. The first tab 912 of the first cell 910 and the second tab 922 of the second cell 920 are located on the upper side the end cap 930. The first tab 912 and the second tab 922 may be connected to the electrode post 931 on the end cap 930 by a connecting strip 940.

The structure of the first cell 910 is similar to the structure of the second cell 920, both being a roughly rectangular block.

A first cell body 911 of the first cell 910 includes a first end face 9111 and a second end face 9112 located at two ends respectively, and a first lateral face 9113, a second lateral face 9114, a third lateral face (not shown), and a fourth lateral face (not shown) that are connected between the two end faces. The first end face 9111 is disposed opposite to the second end face 9112. The first lateral face 9113 and the third lateral face are large sides with a relatively large area, and are disposed opposite to each other. The second lateral face 9114 and the fourth lateral face are small sides with a relatively small area, and are disposed opposite to each other. The first lateral face 9113 and the second lateral face 9114 are adjacent to each other, and located between the first end face 9111 and the second end face 9112. The first tab 912 is disposed on the first end face 9111.

Similarly, a second cell body 921 of the second cell 920 includes a first end face 9211 and a second end face 9212 located at two ends respectively, and a first lateral face 9213, a second lateral face 9214, a third lateral face (not shown), and a fourth lateral face (not shown) that are connected between the two end faces. The first end face 9211 is disposed opposite to the second end face 9212. The first lateral face 9213 and the third lateral face are large sides with a relatively large area, and are disposed opposite to each other. The second lateral face 9214 and the fourth lateral face are small sides with a relatively small area, and are disposed opposite to each other. The first lateral face 9213 and the second lateral face 9214 are adjacent to each other, and located between the first end face 9211 and the second end face 9212. The second tab 922 is disposed on the first end face 9211.

The first end face 9111 of the first cell body 911 and the first end face 9211 of the second cell body 921 are adjacent to each other, and are located on two sides of the end cap 930 respectively. The first tab 912 led out of the first end face 9111 of the first cell body 911 is connected to one side of the end cap 930, and the second tab 922 led out of the first end face 9211 of the second cell 920 is connected to the other side of the end cap 930.

Referring to FIG. 2, FIG. 2 is a status diagram of a power battery after a cell folding operation. After the cell processing equipment performs the cell folding operation on the first cell 910 and the second cell 920 of the power battery, the first end face 9111 of the first cell body 911 and the first end face 9211 of the second cell body 921 fit closely on the end cap 930 separately. In addition, the relatively large first lateral face 9113 of the first cell body 911 fits closely with the relatively large first lateral face 9213 of the second cell body 921 to facilitate subsequent assembling.

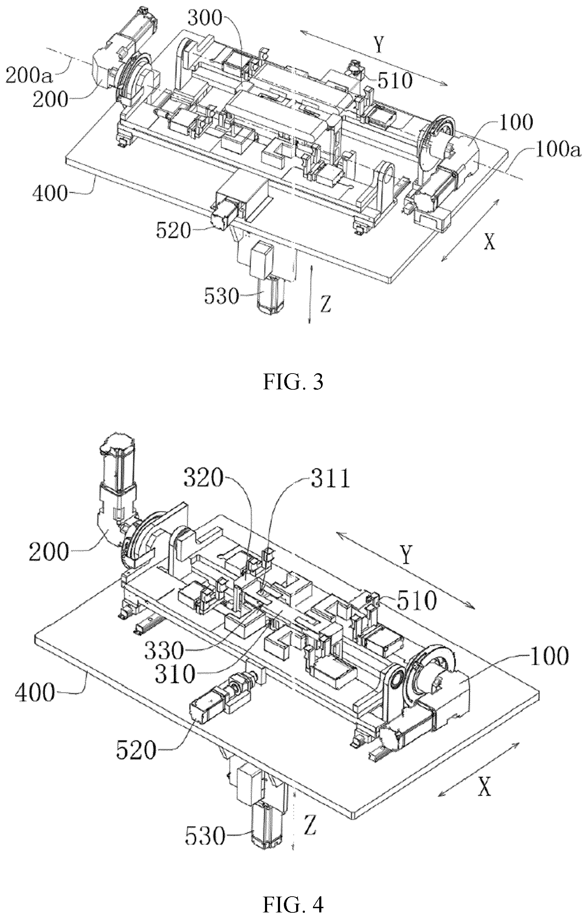

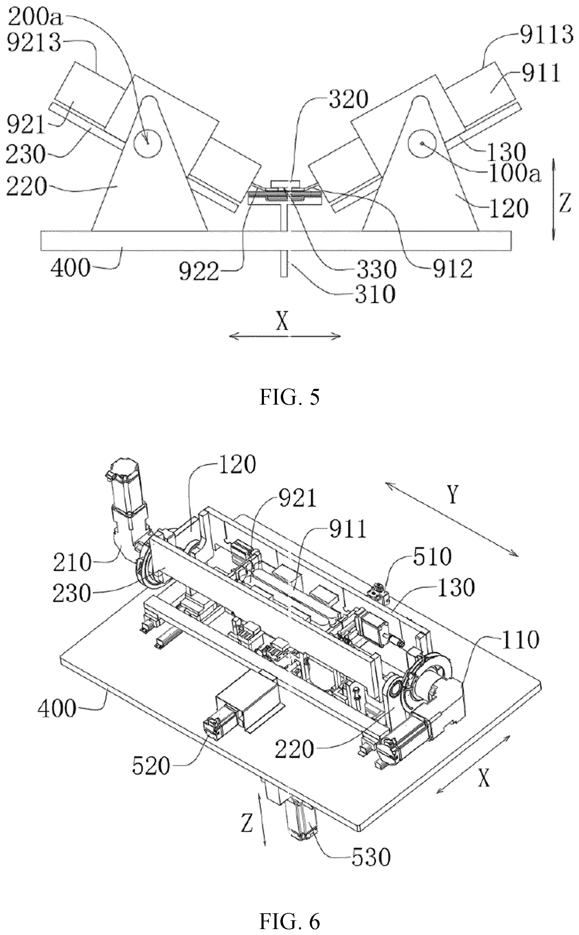

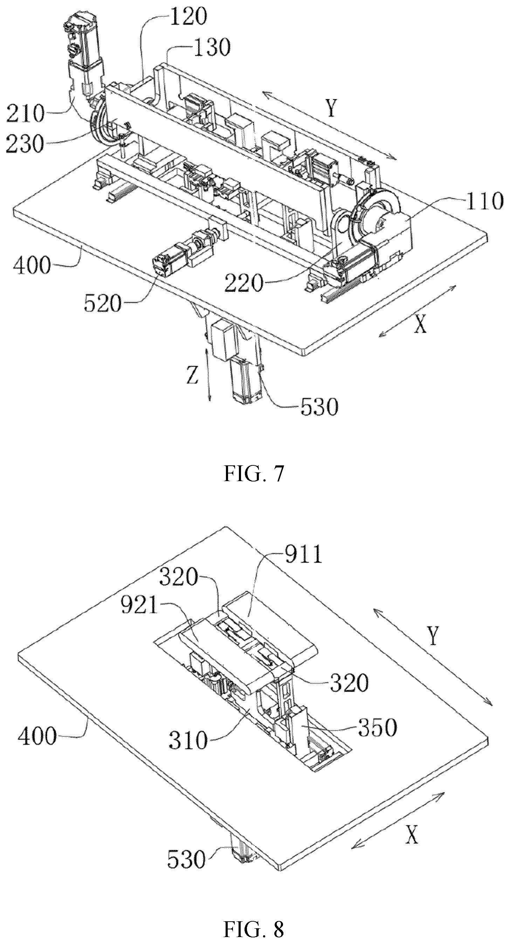

According to some embodiments of this application, referring to FIG. 3 to FIG. 7, in FIG. 3 and FIG. 4, the cell processing equipment is in a start state, the first support assembly is located at a first start angle, and the second support assembly is located at a second start angle. In FIG. 5, the cell processing equipment is in an intermediate state, the first support assembly is located at a first preset angle, and the second support assembly is located at a second preset angle. In FIG. 6 and FIG. 7, the cell processing equipment is in a folded state, the first support assembly is located at a first folding angle, and the second support assembly is located at a second folding angle.

A first aspect of this application provides a piece of cell processing equipment. The equipment includes: a first support assembly 100, a second support assembly 200, and a third support assembly 300.

The first support assembly 100 is configured to fix a cell body. For ease of description, it is defined herein that the first support assembly 100 fixes the first cell body 911 of the first cell 910. The first support assembly 100 can rotate around a first rotation axis 100a.

The second support assembly 200 is configured to fix the cell body. For ease of description, it is defined herein that the second support assembly 200 fixes the second cell body 921 of the second cell 920. The second support assembly 200 can rotate around a second rotation axis 200a.

The third support assembly 300 is configured to fix the tab and the end cap 930. For ease of description, it is defined herein that the third support assembly 300 fixes the first tab 912, the second tab 922, and the end cap 930.

Referring to FIG. 8 to FIG. 11, the third support assembly 300 includes a support seat 310 and a shaping piece 320.

The shaping piece 320 is movable relative to the support seat 310, so as to form a fixing space 330 between the shaping piece 320 and the support seat 310. When necessary, the shaping piece 320 can move to the upper side of the support seat 310 along the second direction, so that a fixing space 330 configured to fix the tabs and the end cap 930 is formed between the shaping piece 320 and the support seat 310 to constrain the first tab 912, the second tab 922, and the end cap 930 from the upper side and the lower side respectively along the second direction. The shaping piece 320 is usually a press plate structure or pressure rod of a specific thickness, and is made of a material of specified hardness and strength such as aluminum alloy, stainless steel, and carbon steel. In this way, the shaping piece 320 is strong enough to press down on the tab to provide a constraint. The shaping piece 320 presses downward against the first tab 912 and the second tab 922 along the second direction, and the support seat 310 gives support under the end plate 930 along the second direction, thereby preventing the first tab 912 and the second tab 922 from being displaced relative to the end cap 930 during cell folding.

Referring to FIG. 1 to FIG. 11, the cell processing equipment includes a fixing bracket 400.

The fixing bracket 400 is usually a board of a specific thickness, and is fixedly connected to the outside such as the ground by a foot. The fixing bracket 400 is configured to fix other components of the cell processing equipment.

The first support assembly 100 and the second support assembly 200 are movably disposed on the fixing bracket 400 along the first direction. The first support assembly 100 and the second support assembly 200 are arranged on two sides of the third support assembly 300 respectively along the first direction. In this way, the first support assembly 100 can drive the first cell body 911 to approach or move away from the third support assembly 300 along the first direction, and the second support assembly 200 can drive the second cell body 921 to approach or move away from the third support assembly 300 along the first direction.

The third support assembly 300 is movably disposed on the fixing bracket 400 along the second direction. In this way, the third support assembly 300 can drive the first tab 912, the second tab 922, and the end cap 930 to move upward or downward along the first direction, so that the distance from the end cap 930 to the first cell body 911 and the second cell body 921 is flexibly adjustable to avoid being unduly long.

The first rotation axis 100a is parallel to the second rotation axis 200a. The second direction is perpendicular to the first direction. Referring to FIG. 3, the first direction is X, and extends horizontally in the front-rear direction. The second direction is Z, and extends vertically along the up-down direction. Both the first rotation axis 100a and the second rotation axis 200a are perpendicular to the first direction and the second direction, and extend along the third direction indicated by Y in FIG. 3.

A specific process of folding cells is: The first support assembly 100 drives the first cell body 911 fixed thereon to rotate around the first rotation axis 100a, so as to bend the first tab 912 of the first cell 910; the second support assembly 200 drives the second cell body 921 to rotate around the second rotation axis 200a, so as to bend the second tab 922 of the second cell 920; the rotation of the first support assembly 100 and the rotation of the second support assembly 200 are usually of the same velocity but in opposite directions. Specifically, with reference to the orientation shown in FIG. 5, the first support assembly 100 rotates counterclockwise, and the second support assembly 200 rotates clockwise, so that the relatively large first lateral face 9113 of the first cell body 911 and the relatively large first lateral face 9213 of the second cell body 921 can approach and fit each other. At the same time, the first support assembly 100 approaches or moves away from the third support assembly 300 along the first direction, so as to adjust the distance between the first support assembly 100 and the third support assembly 300 along the first direction. The second support assembly 200 approaches or moves away from the third support assembly 300 along the first direction to adjust the distance between the second support assembly 200 and the third support assembly 300 along the first direction. The third support assembly 300 is movably disposed along the second direction to adjust the distance from the third support assembly 300 to the second support assembly 200 and the first support assembly 100 along the second direction, thereby facilitating subsequent assembling.

In each embodiment of this application, it is defined that a fold line formed by the bending trace of the first tab 912 is a first fold line, and a fold line formed by the bending trace of the second tab 922 is a second fold line. Understandably, if the first fold line is collinear with the first rotation axis 100a and the second fold line is collinear with the second rotation axis 200a during cell folding, the roots of the first tab 912 and the second tab 922 are pulled by just the bending force but not by an external force during cell folding. However, during cell folding, the first fold line is usually parallel to, and at a distance from, the first rotation axis 100a; and the second fold line is usually parallel to, and at a distance from, the second rotation axis 200a. The distance change with the rotation of the first support assembly 100 and the second support assembly 200. The change is not only a distance change along the first direction, but also a distance change along the second direction.

In this way, the first support assembly 100 and the second support assembly 200 are movably disposed along the first direction, and the third support assembly 300 is movably disposed along the second direction, so that the cell processing equipment can perform distance compensation from the first direction and the second direction separately during cell folding. Therefore, the distance between the first fold line and the first rotation axis 100a as well as the distance between the second fold line and the second rotation axis 200a remain unchanged, thereby effectively preventing the tearing of the first tab 912 and the second tab 922.

An electrode post positioning groove 311 is formed on the support seat 310. The shape of the electrode post positioning groove 311 fits the electrode post 931 on the end cap 930, and is circular or quadrangular, for example. The support seat 310 is T-shaped as a whole. An upper part of the support seat, which is close to the end cap 930, usually extends along the third direction. The support seat 310 may be made of a material of specific hardness and strength such as aluminum alloy, stainless steel, and carbon steel. In this way, the support seat 310 is strong enough to support the first cell 910, the second cell 920, and the end cap 930, and is not prone to deform. Therefore, the cell processing equipment is of relatively high structural strength to ensure smooth progress of the cell folding operation.

Optionally, there are two electrode post positioning grooves 311 arranged along the third direction. The electrode post 931 is inserted in and fits with the electrode post positioning groove 311 to implement positioning, so that the support seat 310 constrains the end cap 930 from the bottom.

The shaping piece 320 moves away from the support seat 310 when the first support assembly 100 rotates around the first rotation axis to such a position that the first support assembly 100 is located at a first preset angle to the fixing bracket 400 and when the second support assembly 200 rotates around the second rotation axis to such a position that the second support assembly 200 is located at a second preset angle to the fixing bracket 400.

When the first support assembly 100 rotates around the first rotation axis 100a, the first support assembly 100 is positioned at a first start angle, a first preset angle, and a first folding angle to the fixing bracket 400 successively. When the second support assembly 200 rotates around the second rotation axis 200a, the second support assembly 200 is positioned at a second start angle, a second preset angle, and a second folding angle to the fixing bracket 400 successively.

The cell processing equipment assumes a start state, an intermediate state, or a folded state.

Referring to FIG. 1 and FIG. 3, the cell processing equipment is in a start state. The first support assembly 100 is located at a first start angle to the fixing bracket 400, and the second support assembly 200 is located at a second start angle to the fixing bracket 400.

Because the first support assembly 100 is located at the first start angle to the fixing bracket 400, the first cell 910 is mounted on the first support assembly 100, and the surface of a first fixing plate 130 (to be mentioned later) is perpendicular to the second direction and parallel to the first direction, the first lateral face 9113 of the first cell body 911 is made to be parallel to the first direction and perpendicular to the second direction. Similarly, because the second support assembly 200 is located at the second start angle to the fixing bracket 400, and the second cell 920 is mounted on the second support assembly 200, the first lateral face 9213 of the second cell body 921 is made to be parallel to the first direction and perpendicular to the second direction. Generally, for convenience of mounting, the first lateral face 9113 of the first cell body 911 and the first lateral face 9213 of the second cell body 921 need to be able to be disposed in the same horizontal plane.

Optionally, the first start angle may be 0°. That is, the first fixing plate 130 (to be mentioned later) at the bottom of the first support assembly 100 is at an angle of 0° to the fixing bracket 400. The first fixing plate 130 is parallel to the fixing bracket 400. The second start angle may be 0°. That is, the second fixing plate 230 (to be mentioned later) at the bottom of the second support assembly 200 is at an angle of 0° to the fixing bracket 400. The second fixing plate 230 is parallel to the fixing bracket 400.

Referring to FIG. 5, the cell processing equipment is in an intermediate state. The first support assembly 100 is located at a first preset angle to the fixing bracket 400, and the second support assembly 200 is located at a second preset angle to the fixing bracket 400.

Because the first support assembly 100 is located at the first preset angle to the fixing bracket 400, the first cell 910 is mounted on the first support assembly 100, and the surface of the first fixing plate 130 is positioned at an angle to the first direction and positioned at an angle to the second direction, the first lateral face 9113 of the first cell body 911 is made to be positioned at an angle to the first direction and positioned at an angle to the second direction. Similarly, because the second support assembly 200 is located at the second preset angle to the fixing bracket 400, the second cell 920 is mounted on the second support assembly 200, and the surface of the second fixing plate 130 is positioned at an angle to the first direction and positioned at an angle to the second direction, the first lateral face 9213 of the second cell body 921 is made to be positioned at an angle to the first direction and positioned at an angle to the second direction.

In a process of switching from the start state to the intermediate state, the first lateral face 9113 of the first cell body 911 rotates opposite to the first lateral face 9213 of the second cell body 921, so as to reach a folded state finally.

In this process, the shaping piece 320 may be located above the support seat 310. A fixing space 330 configured to fix the tabs and the end cap 930 is formed between the shaping piece and the support seat 310, thereby avoiding displacement of the first tab 912 and the second tab 922 relative to the end cap 930.

The values of the first preset angle and the second preset angle may be user-defined according to actual needs, but need to avoid being unduly large or small, so long as the first tab 912 and the second tab 922 form fold lines stably along the edge of the shaping piece 320. An unduly large value of the angle may cause the shaping piece 320 to interfere with the first support assembly 100 and the second support assembly 200. An unduly small value of the angle may cause loosening of the shaping piece 320 before the first tab 912 and the second tab 922 form a stable fold line, thereby resulting in displacement of the first tab 912 and the second tab 922 relative to the end cap 930.

In an embodiment of this application, the first preset angle may be 30°. That is, the bottom of the first support assembly 100 is rotated by 30° counterclockwise around the first rotation axis 100a from the first start angle relative to the fixing bracket 400. The second preset angle may be 30°. That is, the bottom of the second support assembly 200 is rotated by 30° clockwise around the second rotation axis 200a from the second start angle relative to the fixing bracket 400.

Optionally, the first preset angle may be defined as an angle between the first fixing plate 130 and the fixing bracket 400, and may be any value in a range of 15° to 45°. The second preset angle may be defined as an angle between the second fixing plate 230 and the fixing bracket 400, and may be any value in a range of 15° to 45°. Generally, the value of the first preset angle is equal to the value of the second preset angle.

Referring to FIG. 2 and FIG. 6, the cell processing equipment is in a folded state. The first support assembly 100 is located at a first folding angle to the fixing bracket 400, and the second support assembly 200 is located at a second folding angle to the fixing bracket 400.

Because the first support assembly 100 is located at the first folding angle to the fixing bracket 400, the first cell 910 is mounted on the first support assembly 100, and the surface of the first fixing plate 130 is parallel to the second direction and perpendicular to the first direction, the first lateral face 9113 of the first cell body 911 is made to be perpendicular to the first direction and parallel to the second direction. Similarly, because the second support assembly 200 is located at the second folding angle to the fixing bracket 400, and the second cell 920 is mounted on the second support assembly 200, the first lateral face 9213 of the second cell body 921 is made to be perpendicular to the first direction and parallel to the second direction. In this way, the surface of the first fixing plate 130 (to be mentioned later) on the first support assembly 100 is opposite to the surface of the second fixing plate 230 (to be mentioned later) of the second support assembly 200 in the first direction, so that the relatively large first lateral face 9113 of the first cell body 911 fits closely with the relatively large first lateral face 9213 of the second cell body 921.

The first folding angle may be 90°. That is, the bottom of the first support assembly 100 is rotated by 90° counterclockwise around the first rotation axis 100a from the first start angle relative to the fixing bracket 400, being equivalent to rotating by another 60° counterclockwise around the first rotation axis 100a from the first preset angle. The second folding angle may be 90°. That is, the bottom of the second support assembly 200 is rotated by 90° clockwise around the second rotation axis 200a from the second start angle relative to the fixing bracket 400, being equivalent to rotating by another 60° clockwise around the second rotation axis 200a from the second preset angle.

Here, the bottom of the first support assembly 100 may be the first fixing plate 130 (to be mentioned later), and the bottom of the second support assembly 200 may be the second fixing plate 230 (to be mentioned later).

In some embodiments, referring to FIG. 3 to FIG. 5, the cell processing equipment switches from a start state to an intermediate state.

The first support assembly 100 rotates around the first rotation axis 100a from a first start angle to a first preset angle, and the second support assembly 200 rotates around the second rotation axis 200a from a second start angle to a second preset angle.

In this process, the shaping piece 320 is disposed opposite to the support seat 310 along the second direction. A fixing space 330 configured to fix the tabs and the end cap 930 is formed between the shaping piece 320 and the support seat 310, thereby avoiding displacement of the first tab 912 and the second tab 922 relative to the end cap 930 during cell folding.

In addition, in the start state of the cell processing equipment, the first tab 912 and the second tab 922 have not formed a stable first fold line or a stable second fold line by being completely bent. The shaping piece 320 presses down on the first tab 912 and second tab 922 to shape the first tab 912 and second tab 922. The first tab 912 and the second tab 922 form stable fold lines along the edge of the shaping piece 320, thereby achieving high consistency of a first fold line and a second fold line, preventing unstable quality of cell folding, facilitating automatic production, and improving productivity.

In some embodiments, referring to FIG. 5 to FIG. 7, the cell processing equipment switches from a start state to an intermediate state.

The first support assembly 100 rotates around the first rotation axis 100a from a first preset angle to a first folding angle, and the second support assembly 200 rotates around the second rotation axis 200a from a second preset angle to a second folding angle. The shaping piece 320 moves away from the support seat 310. After the first tab 912 and the second tab 922 stably form a fold line along the edge of the shaping piece 320, the shaping piece 320 moves to two ends of the support seat 310 along the third direction, thereby preventing the shaping piece 320 from interfering with the first cell body 911 and the second cell body 921 that gradually approach each other, and preventing tab tearing. After the shaping piece 320 is moved away, the end cap 930 is positioned by means of the electrode post positioning groove 311 on the support seat 310 and other auxiliary structures.

In some embodiments, referring to FIG. 8 to FIG. 11, the third support assembly 300 includes a connecting plate 340 and a driving unit 350. The connecting plate 340 is movably disposed on the fixing bracket 400 along the second direction. The support seat 310 is fixed onto the connecting plate 340. The driving unit 350 is drivingly connected to the shaping piece 320 to drive the shaping piece 320 to move relative to the connecting plate 340.

Used as a fixing piece, the connecting plate 340 is configured to fix the support seat 310, the shaping piece 320, and the driving unit 350. When moving along the second direction, the connecting plate 340 drives the support seat 310 and the shaping piece 320 to move together along the second direction, and the shaping piece 320 is movable relative to the connecting plate 340.

The support seat 310 moves along the second direction relative to the fixing bracket 400, thereby driving the support seat 310 and the shaping piece 320 to move together along the second direction. In this process, the relative position between the support seat 310 and the shaping piece 320 remains unchanged. The driving unit 350 drives the shaping piece 320 to move relative to the connecting plate 340 to form a fixing space 330 between the shaping piece 320 and the support seat 310. In this way, when the cell processing equipment switches from the start state to the intermediate state, the first tab 912 and the second tab 922 are fixed and prevented from being displaced relative to the end cap 930, thereby avoiding tab tearing.

In some embodiments, referring to FIG. 8 to FIG. 11, the third support assembly 300 includes two shaping pieces 320 and two driving units 350. The support seat 310 extends along the third direction to form an elongated shape. The two shaping pieces 320 are located at two ends of the support seat 310 respectively along the third direction. Each driving unit 350 includes a horizontal driving piece 351 and a vertical driving piece 352. The vertical driving piece 352 is drivingly connected to the shaping piece 320 to drive the shaping piece 320 to reciprocate along the second direction. The horizontal driving piece 351 can drive the shaping piece 320 to reciprocate along the third direction. The third direction, the second direction, and the first direction are perpendicular to one another.

The horizontal driving piece 351 is fixed onto the connecting plate 340, and is drivingly connected to the shaping piece 320 by the vertical driving piece 352. The horizontal driving piece 351 can drive the vertical driving piece 352 and the shaping piece 320 to reciprocate together along the third direction.

In this way, the vertical driving piece 352 drives the shaping piece 320 to reciprocate along the second direction relative to the connecting plate 340. The horizontal driving piece 351 drives the shaping piece 320 to reciprocate along the third direction relative to the connecting plate 340. When the first cell body 911 is fixed to the first support assembly 100 and the second cell body 921 is fixed to the second support assembly 200, the shaping piece 320 rises by a specific height along the second direction first, and then moves until above the support seat 310 along the third direction. Subsequently, the shaping piece 320 is lowered by a specific height along the second direction to press down on the first tab 912 and the second tab 922. When the cell processing equipment switches from the start state to the intermediate state, the shaping piece 320 and the lower-side support seat 310 work together to fix the first tab 912, the second tab 922, and the end cap 930 from the top and the bottom respectively, thereby preventing relative displacement. In addition, the shaping piece 320 presses down on the first tab 912 and the second tab 922 to implement shaping for the first tab 912 and the second tab 922. The first tab 912 and the second tab 922 form fold lines stably along the edge of the shaping piece 320, thereby achieving high consistency of the first fold line and the second fold line.

In some embodiments, the horizontal driving piece 351 is a cylinder or motor, and the vertical driving piece 352 is a cylinder or motor.

In some embodiments, referring to FIG. 8 to FIG. 11, the cell processing equipment includes a third driving mechanism 530 fixedly connected to the fixing bracket 400. The third driving mechanism 530 is drivingly connected to the connecting plate 340 to drive the connecting plate 340 to reciprocate relative to the fixing bracket 400 along the second direction.

The cell processing equipment further includes a support portion 531, a third guide rail 532, and a slide block 533. The support portion 531 may be an inverted L-shaped fixing plate. A top end face of the support portion is fixedly connected to the fixing bracket 400, for example, by welding, bolting, or other means. A lateral face 5311 of the support portion 531 extends downward along the second direction, making it convenient to fix the third driving mechanism 530 onto the lateral face 5311 of the support portion 531. The third guide rail 532 is disposed on the lateral face 5311 of the support portion 531 along the second direction. The slide block 533 and the connecting plate 340 are fixed by a bolt to form a whole. The slide block 533 is slidably disposed on the third guide rail 532. The third driving mechanism 530 drives the slide block 533 to slide back and forth along the third guide rail 532. In this way, the third driving mechanism 530 is drivingly connected to the connecting plate 340, and the third driving mechanism 530 drives the connecting plate 340 to reciprocate along the second direction relative to the fixing bracket 400.

In some embodiments, the third driving mechanism 530 is a cylinder device. In some other embodiments, in order to facilitate precise adjustment of the distances from the third support assembly 300 to the second support assembly 200 and the first support assembly 100 along the second direction, the third driving mechanism 530 may be a servo motor, so that the movement precision is higher, and the response is faster.

In some embodiments, the support portion 531 may be made of a material of specific hardness and strength, such as aluminum alloy, stainless steel, and carbon steel. In this way, the support portion 531 is strong enough to support the third driving mechanism 530, the third guide rail 532, and the slide block 533. A reinforcing rib 534 may be added on the support portion 531 to increase the structural strength.

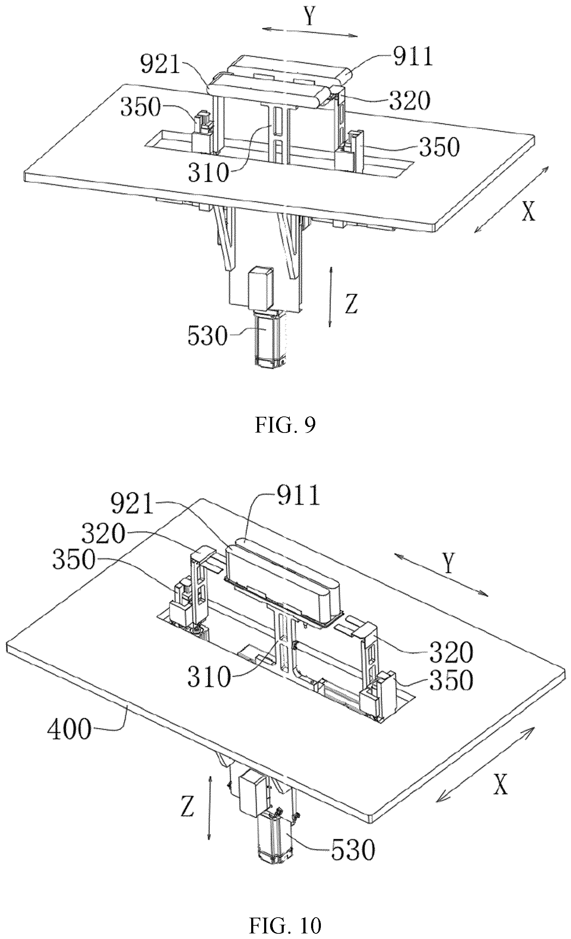

In some embodiments, referring to FIG. 3 to FIG. 7 together with FIG. 10, the first support assembly 100 includes a first rotator 110, a first fixing seat 120, and a first fixing plate 130.

The first fixing plate 130 is configured to fix the cell body. Specifically, in an embodiment of this application, the first fixing plate 130 is configured to fix the first cell body 911.

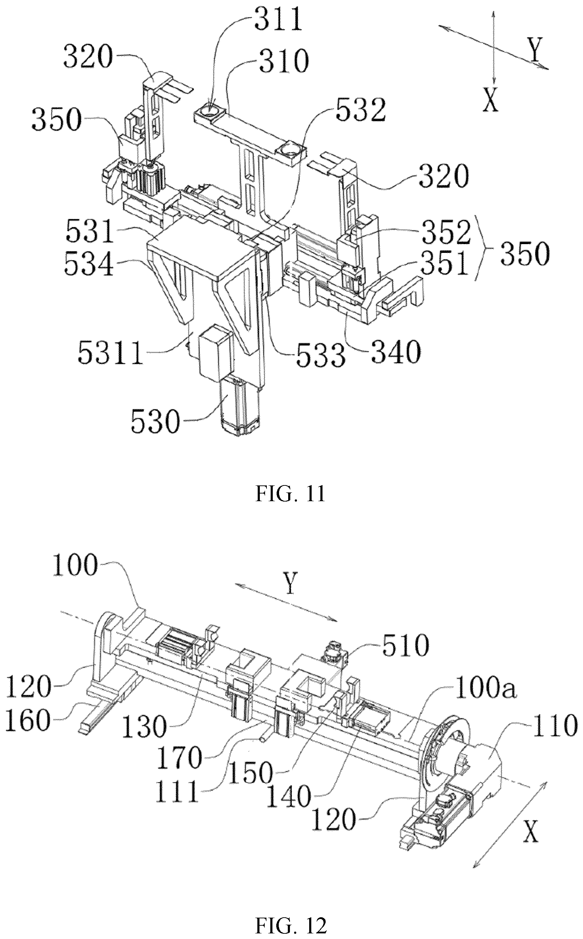

The first cell body 911 is fixed in various ways. In some embodiments, as shown in FIG. 12, the first support assembly 100 may include two first driving cylinders 140 and first positioning claws 150 connected to the first driving cylinders 140. The two first driving cylinders 140 are arranged on the first fixing plate 130 along the third direction. The first driving cylinders 140 drive the first positioning claws 150 to approach each other along the third direction. An arc structure adapted to the shape of the first cell body 911 may be disposed on each first positioning claw 150 to position the first cell body 911 more snugly.

In other embodiments, a positioning groove (not shown) may be made on the first fixing plate 130 to fix the first cell body 911. Alternatively, a pedestal may be added on the first fixing plate 130. The first cell body 911 is adsorbed onto the first fixing plate 130 by means of negative pressure.

The first fixing seat 120 is movably disposed on the fixing bracket 400 along the first direction. The first support assembly 100 may include a first guide rail 160. The first guide rail 160 is disposed on the fixing bracket 400 along the first direction. The first fixing seat 120 is slidably disposed on the first guide rail 160.

The first fixing plate 130 is rotatably connected to the first fixing seat 120. The first rotator 110 is drivingly connected to the first fixing plate 130 to drive the first fixing plate 130 to rotate around the first rotation axis 100a. The first fixing seats 120 may be two in number, and are disposed at two ends of the first fixing plate 130 respectively along the third direction. Correspondingly, two first guide rails 160 are disposed to coordinate with the two first fixing seats 120 respectively. The first rotator 110 may be disposed on one of the first fixing seats 120, and may be drivingly connected to one end of the first fixing plate 130. In this way, the first fixing seat 120 can be movably disposed on the fixing bracket 400 along the first direction.

In some embodiments, the first rotator 110 may be a motor.

In some embodiments, referring to FIG. 3 to FIG. 7 together with FIG. 12, the cell processing equipment includes a first driving mechanism 510. The first driving mechanism 510 is drivingly connected to the first fixing seat 120 to drive the first fixing seat 120 to move along the first direction.

The first driving mechanism 510 is a servo motor. An output shaft of the first driving mechanism is connected to a first screw rod 111. A first fixing rod 170 is connected between the two first fixing seats 120. A screw hole is made on the first fixing rod 170, and the first screw rod 111 is screwed in the screw hole. Therefore, when the servo motor drives the first screw rod 111 to rotate, the screw thread converts the rotation into movement of the first fixing rod 170 along the first direction relative to the first screw rod 111, and in turn, drives the first fixing seat 120 to reciprocate along the first direction relative to the fixing bracket 400 under the guidance of the first guide rail 160.

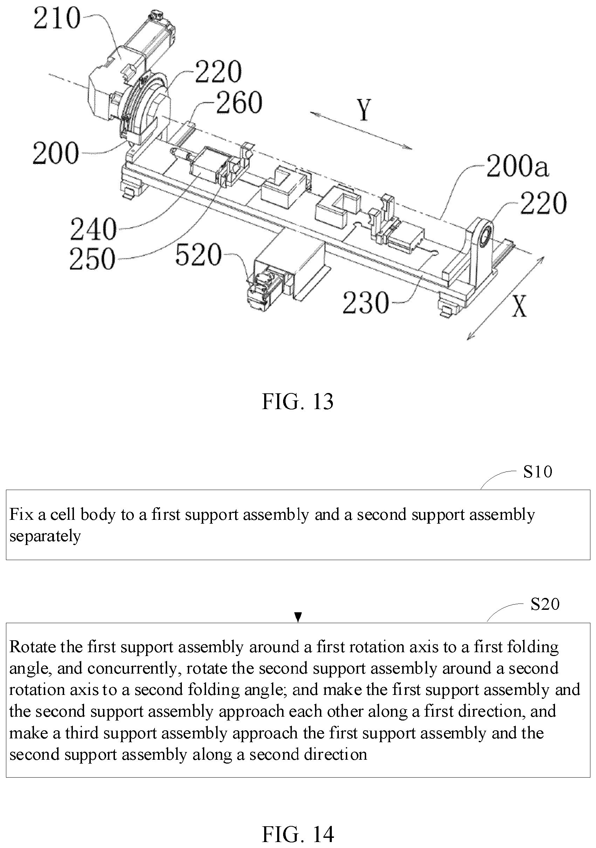

In some embodiments, referring to FIG. 3 to FIG. 7 together with FIG. 13, the second support assembly 200 includes a second rotator 210, a second fixing seat 220, and a second fixing plate 230.

The second fixing plate 230 is configured to fix the cell body. Specifically, in an embodiment of this application, the second fixing plate 230 is configured to fix the second cell body 921.

The second cell body 921 is fixed in various ways. In some embodiments, as shown in FIG. 13, the second support assembly 200 may include two second driving cylinders 240 and second positioning claws 250 connected to the second driving cylinders 240. The two second driving cylinders 240 are arranged on the second fixing plate 230 along the third direction. The second driving cylinders 240 drive the second positioning claws 150 to approach each other along the third direction. An arc structure adapted to the shape of the second cell body 921 may be disposed on each second positioning claw 150 to position the second cell body 921 more snugly.

In other embodiments, a positioning groove (not shown) may be made on the second fixing plate 230 to fix the second cell body 921. Alternatively, a pedestal may be added on the second fixing plate 230. The second cell body 921 is adsorbed onto the second fixing plate 230 by means of negative pressure.

The second fixing seat 220 is movably disposed on the fixing bracket 400 along the first direction. The second support assembly 200 may include a second guide rail 260. The second guide rail 260 is disposed on the fixing bracket 400 along the first direction. The second fixing seat 220 is slidably disposed on the first guide rail 160.

The second fixing plate 230 is rotatably connected to the second fixing seat 220. The second rotator 210 is drivingly connected to the second fixing plate 230 to drive the second fixing plate 230 to rotate around the second rotation axis 200a.

The second fixing seats 220 may be two in number, and are disposed at two ends of the second fixing plate 230 respectively along the third direction. Correspondingly, two second guide rails 260 are disposed to coordinate with the two first fixing seats 120 respectively. The second rotator 210 may be disposed on one of the second fixing seats 220, and may be drivingly connected to one end of the first fixing plate 220. In this way, the second fixing seat 220 can be movably disposed on the fixing bracket 400 along the first direction.

In some embodiments, the second rotator 210 may be a motor.

In some embodiments, referring to FIG. 3 to FIG. 7 together with FIG. 13, the cell processing equipment includes a second driving mechanism 520. The second driving mechanism 520 is drivingly connected to the second fixing seat 220 to drive the second fixing seat 220 to move along the first direction.

The second driving mechanism 520 is a servo motor. The specific transmission structure of the second driving mechanism may be similar to that of the first driving mechanism 510. An output shaft of the second driving mechanism 520 is connected to a second screw rod. A second fixing rod is connected between the two second fixing seats 220. A screw hole is made on the second fixing rod, and the second screw rod is screwed in the screw hole. Therefore, when the servo motor drives the second screw rod to rotate, the screw thread converts the rotation into movement of the second fixing rod along the first direction relative to the second screw rod, and in turn, drives the second fixing seat 220 to reciprocate along the first direction relative to the fixing bracket 400 under the guidance of the second guide rail 260.

In some embodiments, when the cell processing equipment is in the start state, as shown in FIG. 1, FIG. 3, FIG. 12, and FIG. 13, the surface of the first fixing plate 130 serves as a surface on which the first cell body 911 lies flat. The first support assembly 100 is located at the first start angle. The surface of the first fixing plate 130 is perpendicular to the second direction, and parallel to the first direction. The surface of the second fixing plate 230 serves as a surface on which the second cell body 912 lies flat. The second support assembly 200 is located at the first start angle. The surface of the second fixing plate 230 is perpendicular to the second direction, and parallel to the first direction.

In some embodiments, when the cell processing equipment is in the intermediate state, as shown in FIG. 5, FIG. 12, and FIG. 13, the first support assembly 100 is located at the first preset angle, and the surface of the first fixing plate 130 is disposed at an angle to the first direction and disposed at an angle to the second direction. The second support assembly 200 is located at the first preset angle, and the surface of the second fixing plate 230 is disposed at an angle to the first direction and disposed at an angle to the second direction.

Before switching from the start angle to the first preset angle, the shaping piece 320 presses down on the first tab 912 and the second tab 922, so as to facilitate the first tab 912 and the second tab 922 to bend along the edge of the shaping piece 320 to form a first fold line.

Generally, the angle between the surface of the first fixing plate 130 and the first direction needs to avoid being excessive, and may be any value in the range of 15° to 45°. If the angle is deficient, the shaping piece 320 will be withdrawn before the first tab 912 and the second tab 922 can form stable first fold line and second fold line, thereby making the first tab 912 and the second tab 922 prone to be torn due to movement relative to the end cap 930. If the angle is excessive, the shaping piece 320 is prone to interfere with other structures when being withdrawn.

In some embodiments, when the cell processing equipment is in the folded state, as shown in FIG. 2, FIG. 6, and FIG. 12, the first support assembly 100 is located at the first folding angle, and the surface of the first fixing plate 130 is parallel to the second direction and perpendicular to the first direction. The second support assembly 200 is located at the first folding angle, and the surface of the second fixing plate 230 is parallel to the second direction and perpendicular to the first direction. In other words, when the first support assembly 100 is in the start state, intermediate state, and finally the folded state, the surface of the first fixing plate 130 is always parallel to the first rotation axis 100a; and, when the second support assembly 200 is in the start state, intermediate state, and finally the folded state, the surface of the second fixing plate 230 is always parallel to the second rotation axis 200a without intersecting.

A second aspect of this application provides a cell processing method. The method includes a cell folding operation performed by using the cell processing equipment. Referring to FIG. 14, the cell processing method includes the following steps:
S 10. Fix a cell body to a first support assembly 100 and a second support assembly 200 separately; and
S20. Rotate the first support assembly 100 around a first rotation axis 100a to a first folding angle, and concurrently, rotate the second support assembly 200 around a second rotation axis 200a to a second folding angle; and make the first support assembly 100 and the second support assembly 200 approach each other along a first direction, and make a third support assembly 300 approach the first support assembly 100 and the second support assembly 200 along a second direction.

In this way, the first support assembly 100 and the second support assembly 200 are movably disposed along the first direction, and the third support assembly 300 is movably disposed along the second direction, so that the cell processing equipment can perform distance compensation from the first direction and the second direction separately during cell folding. Therefore, the distance between the first fold line and the first rotation axis 100a as well as the distance between the second fold line and the second rotation axis 200a remain unchanged, thereby effectively preventing the tearing of the first tab 912 and the second tab 922.

In some embodiments, step S20 includes the following substeps:
S21. Keep the first support assembly 100 and the second support assembly 200 fixed to the third support assembly 300 along the first direction when the first support assembly 100 rotates from a first start angle to a first preset angle and the second support assembly 200 rotates from a second start angle to a second preset angle.

To be specific, when the cell processing equipment switches from a start state to an intermediate state, the first support assembly 100 and the second support assembly 200 keep fixed to the third support assembly 300. In this case, a shaping piece 320 presses down against a first tab 912 and a second tab 922 along the second direction to avoid displacement of the first tab 912 and the second tab 922 relative to an end cap 930 and implement shaping of the first tab 912 and the second tab 922. The first tab 912 and the second tab 922 stably form fold lines along the edge of the shaping piece 320, thereby achieving high consistency of the first fold line and the second fold line.

S22. Move the shaping piece 320 away from a support seat 310. In this way, the shaping piece 320 is prevented from interfering with the first support assembly 100 and the second support assembly 200.

S23. Make the first support assembly 100 and the second support assembly 200 approach the third support assembly 300 along the first direction and make the third support assembly 300 approach the first support assembly 100 and the second support assembly 200 along the second direction when the first support assembly 100 rotates from a first preset angle to a first folding angle and the second support assembly 200 rotates from a second preset angle to a second folding angle.

In this way, the first support assembly 100 and the second support assembly 200 are movably disposed along the first direction, and the third support assembly 300 is movably disposed along the second direction, so that the cell processing equipment can perform distance compensation from the first direction and the second direction separately during cell folding. Therefore, the distance between the first fold line and the first rotation axis 100a as well as the distance between the second fold line and the second rotation axis 200a remain unchanged, thereby effectively preventing the tearing of the first tab 912 and the second tab 922.

A third aspect of this application provides a battery production line. The battery production line includes the cell processing equipment described above.

Finally, it is hereby noted that, the technical features in the foregoing embodiments may be combined arbitrarily. For brevity, not all possible combinations of the technical features in the embodiments are described. However, to the extent that no conflict exists, all such combinations of the technical features are considered falling within the scope hereof.

The foregoing embodiments merely describe several implementations of this application. The description is relatively detailed, but constitutes no limitation on the patent scope hereof. It is hereby noted that several variations and improvements, which may be made to the embodiments by a person of ordinary skill in the art without departing from the concept of this application, fall within the protection scope of this application. Therefore, the protection scope of this application is subject to the claims appended hereto.

## Claims

1. A piece of cell processing equipment, comprising:
a first support assembly (100), configured to fix a cell body, wherein the first support assembly (100) is able to rotate around a first rotation axis;
a second support assembly (200), configured to fix the cell body, wherein the second support assembly (200) is able to rotate around a second rotation axis, and the first rotation axis is disposed parallel to the second rotation axis; and
a third support assembly (300), configured to fix a tab and an end cap (930), wherein the third support assembly (300) comprises a support seat (310) and a shaping piece (320), and the shaping piece (320) is disposed movably relative to the support seat (310);
wherein the cell processing equipment comprises a fixing bracket (400);
the first support assembly (100) and the second support assembly (200) are movably disposed on the fixing bracket (400) along a first direction, and the first support assembly (100) and the second support assembly (200) are arranged on two sides of the third support assembly (300) respectively along the first direction; and
the third support assembly (300) is movably disposed on the fixing bracket (400) along a second direction, and the second direction is perpendicular to the first direction;
wherein the shaping piece (320) is configured to move away from the support seat (310) when the first support assembly (100) rotates around the first rotation axis to such a position that the first support assembly (100) is located at a first preset angle to the fixing bracket (400) and when the second support assembly (200) rotates around the second rotation axis to such a position that the second support assembly (200) is located at a second preset angle to the fixing bracket (400); and **characterised in, that**
an electrode post positioning groove (311) is formed on the support seat (310), wherein a shape of the electrode post positioning groove (311) fits an electrode post (931) on the end cap (930).

2. The cell processing equipment according to claim 1, wherein the third support assembly (300) comprises a connecting plate (340) and a driving unit (350);
the connecting plate (340) is movably disposed on the fixing bracket (400) along the second direction;
the support seat (310) is fixed onto the connecting plate (340); and
the driving unit (350) is drivingly connected to the shaping piece (320) to drive the shaping piece (320) to move relative to the connecting plate (340).

3. The cell processing equipment according to claim 2, wherein the third support assembly (300) comprises two shaping pieces (320) and two driving units (350);
the two shaping pieces (320) are located at two ends of the support seat (310) respectively along a third direction;
each driving unit (350) comprises a horizontal driving piece (351) and a vertical driving piece (352);
the vertical driving piece (352) is drivingly connected to the shaping piece (320) to drive the shaping piece (320) to reciprocate along the second direction;
the horizontal driving piece (351) is able to drive the shaping piece (320) to reciprocate along the third direction; and
the third direction, the second direction, and the first direction are perpendicular to one another.

4. The cell processing equipment according to claim 2, wherein the cell processing equipment comprises a third driving mechanism (530) fixedly connected to the fixing bracket (400), and the third driving mechanism (530) is drivingly connected to the connecting plate (340) to drive the connecting plate (340) to reciprocate relative to the fixing bracket (400) along the second direction.

5. The cell processing equipment according to any one of claims 1 to 4, wherein the first support assembly (100) comprises a first rotator (110), a first fixing seat (120), and a first fixing plate (130);
the first fixing plate (130) is configured to fix the cell body;
the first fixing seat (120) is movably disposed on the fixing bracket (400) along the first direction;
the first fixing plate (130) is rotatably connected to the first fixing seat (120), and the first rotator (110) is drivingly connected to the first fixing plate (130) to drive the first fixing plate (130) to rotate around the first rotation axis; and
the first support assembly (100) is located at the first preset angle, and a surface of the first fixing plate (130) is disposed at an angle to the first direction and disposed at an angle to the second direction.

6. The cell processing equipment according to claim 5, wherein the cell processing equipment comprises a first driving mechanism (510), and the first driving mechanism (510) is drivingly connected to the first fixing seat (120) to drive the first fixing seat (120) to move along the first direction.

7. The cell processing equipment according to any one of claims 1 to 6, wherein the second support assembly (200) comprises a second rotator (210), a second fixing seat (220), and a second fixing plate (230);
the second fixing plate (230) is configured to fix the cell body;
the second fixing seat (220) is movably disposed on the fixing bracket (400) along the first direction;
the second fixing plate (230) is rotatably connected to the second fixing seat (220), and the second rotator (210) is drivingly connected to the second fixing plate (230) to drive the second fixing plate (230) to rotate around the second rotation axis; and
the second support assembly (200) is located at the first preset angle, and a surface of the second fixing plate (230) is disposed at an angle to the first direction and disposed at an angle to the second direction.

8. The cell processing equipment according to claim 7, wherein the cell processing equipment comprises a second driving mechanism (520), and the second driving mechanism (520) is drivingly connected to the second fixing seat (220) to drive the second fixing seat (220) to move along the first direction.

9. A cell processing method, wherein the method performs a cell folding operation by using the cell processing equipment according to any one of claims 1 to 8, and the method comprises:
fixing the cell body to the first support assembly (100) and the second support assembly (200) separately;
rotating the first support assembly (100) around the first rotation axis to a first folding angle, and concurrently, rotating the second support assembly (200) around the second rotation axis to a second folding angle; and making the first support assembly (100) and the second support assembly (200) approach each other along the first direction, and making the third support assembly (300) approach the first support assembly (100) and the second support assembly (200) along the second direction.

10. The cell processing method according to claim 9, wherein the step of "rotating the first support assembly (100) around the first rotation axis to a first folding angle, and concurrently, rotating the second support assembly (200) around the second rotation axis to a second folding angle; and making the first support assembly (100) and the second support assembly (200) approach each other along the first direction, and making the third support assembly (300) approach the first support assembly (100) and the second support assembly (200) along the second direction" comprises:
keeping the first support assembly (100) and the second support assembly (200) fixed to the third support assembly (300) along the first direction when the first support assembly (100) rotates from a first start angle to a first preset angle and the second support assembly (200) rotates from a second start angle to a second preset angle;
moving the shaping piece (320) away from the support seat (310); and
making the first support assembly (100) and the second support assembly (200) approach the third support assembly (300) along the first direction and making the third support assembly (300) approach the first support assembly (100) and the second support assembly (200) along the second direction when the first support assembly (100) rotates from the first preset angle to the first folding angle and the second support assembly (200) rotates from the second preset angle to the second folding angle.

11. A battery production line, comprising the cell processing equipment according to any one of claims 1 to 8.

## Patentansprüche

1. Zellbearbeitungsgerät, umfassend:
- eine erste Trägeranordnung (100), konfiguriert zum Fixieren eines Zellkörpers, wobei die erste Trägeranordnung (100) um eine erste Rotationsachse drehbar ist;
- eine zweite Trägeranordnung (200), konfiguriert zum Fixieren des Zellkörpers, wobei die zweite Trägeranordnung (200) um eine zweite Rotationsachse drehbar ist, und die erste Rotationsachse parallel zur zweiten Rotationsachse angeordnet ist; und
- eine dritte Trägeranordnung (300), konfiguriert zum Fixieren einer Lasche und eines Enddeckels (930), wobei die dritte Trägeranordnung (300) einen Trägersitz (310) und ein Formstück (320) umfasst, und das Formstück (320) relativ zum Trägersitz (310) beweglich angeordnet ist;
wobei das Zellbearbeitungsgerät eine Befestigungshalterung (400) umfasst;
die erste Trägeranordnung (100) und die zweite Trägeranordnung (200) entlang einer ersten Richtung beweglich auf der Befestigungshalterung (400) angeordnet sind und jeweils auf zwei Seiten der dritten Trägeranordnung (300) entlang der ersten Richtung angeordnet sind;
die dritte Trägeranordnung (300) entlang einer zweiten Richtung beweglich auf der Befestigungshalterung (400) angeordnet ist, wobei die zweite Richtung senkrecht zur ersten Richtung verläuft;
wobei das Formstück (320) konfiguriert ist, sich vom Trägersitz (310) zu entfernen, wenn die erste Trägeranordnung (100) um die erste Rotationsachse in eine Position rotiert, in der sich die erste Trägeranordnung (100) in einem ersten voreingestellten Winkel zur Befestigungshalterung (400) befindet, und wenn die zweite Trägeranordnung (200) um die zweite Rotationsachse in eine Position rotiert, in der sich die zweite Trägeranordnung (200) in einem zweiten voreingestellten Winkel zur Befestigungshalterung (400) befindet;
**dadurch gekennzeichnet, dass**
eine Elektrodenpol-Positionierungsnut (311) auf dem Trägersitz (310) ausgebildet ist, wobei die Form der Elektrodenpol-Positionierungsnut (311) zu einem Elektrodenpol (931) auf dem Enddeckel (930) passt.

2. Zellbearbeitungsgerät nach Anspruch 1, wobei die dritte Trägeranordnung (300) umfasst:
- eine Verbindungsplatte (340), die entlang der zweiten Richtung beweglich auf der Befestigungshalterung (400) angeordnet ist;
- einen Trägersitz (310), der auf der Verbindungsplatte (340) befestigt ist; und
- eine Antriebseinheit (350), die mit dem Formstück (320) angetrieben verbunden ist, um das Formstück (320) relativ zur Verbindungsplatte (340) zu bewegen.

3. Zellbearbeitungsgerät nach Anspruch 2, wobei die dritte Trägeranordnung (300) umfasst:
- zwei Formstücke (320), die jeweils an zwei Enden des Trägersitzes (310) entlang einer dritten Richtung angeordnet sind; und
- zwei Antriebseinheiten (350), wobei jede Antriebseinheit (350) umfasst:
- ein horizontales Antriebsteil (351), konfiguriert zum Bewegen des Formstücks (320) entlang der dritten Richtung; und
- ein vertikales Antriebsteil (352), konfiguriert zum Bewegen des Formstücks (320) entlang der zweiten Richtung;
wobei die erste, zweite und dritte Richtung jeweils senkrecht zueinander stehen.

4. Zellbearbeitungsgerät nach Anspruch 2, wobei das Zellbearbeitungsgerät einen dritten Antriebsmechanismus (530) umfasst, der fest mit der Befestigungshalterung (400) verbunden ist und mit der Verbindungsplatte (340) angetrieben verbunden ist, um die Verbindungsplatte (340) entlang der zweiten Richtung hin- und herzubewegen.

5. Zellbearbeitungsgerät nach einem der Ansprüche 1 bis 4, wobei die erste Trägeranordnung (100) umfasst:
- einen ersten Rotator (110);
- einen ersten Befestigungssitz (120), der entlang der ersten Richtung beweglich auf der Befestigungshalterung (400) angeordnet ist; und
- eine erste Befestigungsplatte (130), die konfiguriert ist, den Zellkörper zu fixieren und drehbar mit dem ersten Befestigungssitz (120) verbunden ist;
wobei der erste Rotator (110) mit der ersten Befestigungsplatte (130) angetrieben verbunden ist, um die erste Befestigungsplatte (130) um die erste Rotationsachse zu drehen;
und wobei die erste Trägeranordnung (100) sich im ersten voreingestellten Winkel befindet und eine Oberfläche der ersten Befestigungsplatte (130) in einem Winkel zur ersten und zweiten Richtung angeordnet ist.

6. Zellbearbeitungsgerät nach Anspruch 5, wobei das Zellbearbeitungsgerät einen ersten Antriebsmechanismus (510) umfasst, der mit dem ersten Befestigungssitz (120) angetrieben verbunden ist, um den ersten Befestigungssitz (120) entlang der ersten Richtung zu bewegen.

7. Zellbearbeitungsgerät nach einem der Ansprüche 1 bis 6, wobei die zweite Trägeranordnung (200) umfasst:
- einen zweiten Rotator (210);
- einen zweiten Befestigungssitz (220), der entlang der ersten Richtung beweglich auf der Befestigungshalterung (400) angeordnet ist; und
- eine zweite Befestigungsplatte (230), die konfiguriert ist, den Zellkörper zu fixieren und drehbar mit dem zweiten Befestigungssitz (220) verbunden ist;
wobei der zweite Rotator (210) mit der zweiten Befestigungsplatte (230) angetrieben verbunden ist, um die zweite Befestigungsplatte (230) um die zweite Rotationsachse zu drehen;
und wobei die zweite Trägeranordnung (200) sich im zweiten voreingestellten Winkel befindet und eine Oberfläche der zweiten Befestigungsplatte (230) in einem Winkel zur ersten und zweiten Richtung angeordnet ist.

8. Zellbearbeitungsgerät nach Anspruch 7, wobei das Zellbearbeitungsgerät einen zweiten Antriebsmechanismus (520) umfasst, der mit dem zweiten Befestigungssitz (220) angetrieben verbunden ist, um den zweiten Befestigungssitz (220) entlang der ersten Richtung zu bewegen.

9. Zellbearbeitungsverfahren, umfassend die Durchführung eines Zellfaltvorgangs unter Verwendung des Zellbearbeitungsgeräts nach einem der Ansprüche 1 bis 8, wobei das Verfahren umfasst:
- Fixieren des Zellkörpers an der ersten Trägeranordnung (100) und der zweiten Trägeranordnung (200);
- Drehen der ersten Trägeranordnung (100) um die erste Rotationsachse in einen ersten Faltwinkel und gleichzeitig Drehen der zweiten Trägeranordnung (200) um die zweite Rotationsachse in einen zweiten Faltwinkel; und
- Annähern der ersten Trägeranordnung (100) und der zweiten Trägeranordnung (200) entlang der ersten Richtung sowie Annähern der dritten Trägeranordnung (300) entlang der zweiten Richtung an die erste und zweite Trägeranordnung.

10. Zellbearbeitungsverfahren nach Anspruch 9, wobei der Schritt des Drehens und Annäherns umfasst:
- Halten der ersten und zweiten Trägeranordnung (100, 200) entlang der ersten Richtung fixiert zur dritten Trägeranordnung (300), wenn die erste Trägeranordnung (100) sich von einem ersten Startwinkel zu einem ersten voreingestellten Winkel dreht und die zweite Trägeranordnung (200) sich von einem zweiten Startwinkel zu einem zweiten voreingestellten Winkel dreht;
- Bewegen des Formstücks (320) vom Trägersitz (310) weg; und
- Annähern der ersten und zweiten Trägeranordnung (100, 200) an die dritte Trägeranordnung (300) entlang der ersten Richtung sowie Annähern der dritten Trägeranordnung (300) an die erste und zweite Trägeranordnung entlang der zweiten Richtung, wenn die erste Trägeranordnung (100) sich vom ersten voreingestellten Winkel zum ersten Faltwinkel dreht und die zweite Trägeranordnung (200) sich vom zweiten voreingestellten Winkel zum zweiten Faltwinkel dreht.

11. Batterieproduktionslinie, umfassend das Zellbearbeitungsgerät nach einem der Ansprüche 1 bis 8.

## Revendications

1. Équipement de traitement de cellule, comprenant :
- un premier ensemble de support (100), configuré pour fixer un corps de cellule, le premier ensemble de support (100) étant apte à tourner autour d'un premier axe de rotation ;
- un deuxième ensemble de support (200), configuré pour fixer le corps de cellule, le deuxième ensemble de support (200) étant apte à tourner autour d'un deuxième axe de rotation, et le premier axe de rotation étant disposé parallèlement au deuxième axe de rotation ; et
- un troisième ensemble de support (300), configuré pour fixer une languette et un couvercle d'extrémité (930), le troisième ensemble de support (300) comprenant un siège de support (310) et une pièce de formage (320), la pièce de formage (320) étant disposée de manière mobile par rapport au siège de support (310) ;
dans lequel l'équipement de traitement de cellule comprend un support de fixation (400) ;
le premier ensemble de support (100) et le deuxième ensemble de support (200) sont disposés de manière mobile sur le support de fixation (400) le long d'une première direction et sont respectivement disposés de part et d'autre du troisième ensemble de support (300) le long de la première direction ;
le troisième ensemble de support (300) est disposé de manière mobile sur le support de fixation (400) le long d'une deuxième direction, la deuxième direction étant perpendiculaire à la première direction ;
dans lequel la pièce de formage (320) est configurée pour s'éloigner du siège de support (310) lorsque le premier ensemble de support (100) tourne autour du premier axe de rotation jusqu'à une position où le premier ensemble de support (100) est situé à un premier angle prédéfini par rapport au support de fixation (400) et lorsque le deuxième ensemble de support (200) tourne autour du deuxième axe de rotation jusqu'à une position où le deuxième ensemble de support (200) est situé à un deuxième angle prédéfini par rapport au support de fixation (400) ;
**caractérisé en ce qu'**une rainure de positionnement de borne d'électrode (311) est formée sur le siège de support (310), la forme de la rainure de positionnement de borne d'électrode (311) correspondant à une borne d'électrode (931) sur le couvercle d'extrémité (930).

2. Équipement de traitement de cellule selon la revendication 1, dans lequel le troisième ensemble de support (300) comprend :
- une plaque de liaison (340), disposée de manière mobile sur le support de fixation (400) le long de la deuxième direction ;
- le siège de support (310), fixé sur la plaque de liaison (340) ; et
- une unité d'entraînement (350), reliée de manière motrice à la pièce de formage (320) pour déplacer la pièce de formage (320) par rapport à la plaque de liaison (340).

3. Équipement de traitement de cellule selon la revendication 2, dans lequel le troisième ensemble de support (300) comprend :
- deux pièces de formage (320), disposées respectivement aux deux extrémités du siège de support (310) le long d'une troisième direction ; et
- deux unités d'entraînement (350), chacune comprenant :
- une pièce d'entraînement horizontale (351), apte à déplacer la pièce de formage (320) le long de la troisième direction ; et
- une pièce d'entraînement verticale (352), apte à déplacer la pièce de formage (320) le long de la deuxième direction ;
dans lequel la première, la deuxième et la troisième direction sont perpendiculaires les unes aux autres.

4. Équipement de traitement de cellule selon la revendication 2, dans lequel l'équipement de traitement de cellule comprend un troisième mécanisme d'entraînement (530), relié de manière fixe au support de fixation (400), et le troisième mécanisme d'entraînement (530) est relié de manière motrice à la plaque de liaison (340) pour déplacer la plaque de liaison (340) en va-et-vient par rapport au support de fixation (400) le long de la deuxième direction.

5. Équipement de traitement de cellule selon l'une des revendications 1 à 4, dans lequel le premier ensemble de support (100) comprend :
- un premier rotateur (110) ;
- un premier siège de fixation (120), disposé de manière mobile sur le support de fixation (400) le long de la première direction ; et
- une première plaque de fixation (130), configurée pour fixer le corps de cellule et reliée de manière rotative au premier siège de fixation (120) ;
dans lequel le premier rotateur (110) est relié de manière motrice à la première plaque de fixation (130) pour entraîner la rotation de la première plaque de fixation (130) autour du premier axe de rotation ;
et dans lequel le premier ensemble de support (100) est situé au premier angle prédéfini, et une surface de la première plaque de fixation (130) est disposée selon un angle par rapport à la première direction et selon un angle par rapport à la deuxième direction.

6. Équipement de traitement de cellule selon la revendication 5, dans lequel l'équipement de traitement de cellule comprend un premier mécanisme d'entraînement (510), relié de manière motrice au premier siège de fixation (120) pour déplacer le premier siège de fixation (120) le long de la première direction.

7. Équipement de traitement de cellule selon l'une des revendications 1 à 6, dans lequel le deuxième ensemble de support (200) comprend :
- un deuxième rotateur (210) ;
- un deuxième siège de fixation (220), disposé de manière mobile sur le support de fixation (400) le long de la première direction ; et
- une deuxième plaque de fixation (230), configurée pour fixer le corps de cellule et reliée de manière rotative au deuxième siège de fixation (220) ;
dans lequel le deuxième rotateur (210) est relié de manière motrice à la deuxième plaque de fixation (230) pour entraîner la rotation de la deuxième plaque de fixation (230) autour du deuxième axe de rotation ;
et dans lequel le deuxième ensemble de support (200) est situé au deuxième angle prédéfini, et une surface de la deuxième plaque de fixation (230) est disposée selon un angle par rapport à la première direction et selon un angle par rapport à la deuxième direction.

8. Équipement de traitement de cellule selon la revendication 7, dans lequel l'équipement de traitement de cellule comprend un deuxième mécanisme d'entraînement (520), relié de manière motrice au deuxième siège de fixation (220) pour déplacer le deuxième siège de fixation (220) le long de la première direction.

9. Procédé de traitement de cellule, comprenant l'exécution d'une opération de pliage de cellule à l'aide de l'équipement de traitement de cellule selon l'une des revendications 1 à 8, le procédé comprenant:
- fixer le corps de cellule au premier ensemble de support (100) et au deuxième ensemble de support (200) séparément ;
- faire tourner le premier ensemble de support (100) autour du premier axe de rotation jusqu'à un premier angle de pliage et simultanément faire tourner le deuxième ensemble de support (200) autour du deuxième axe de rotation jusqu'à un deuxième angle de pliage ; et
- rapprocher le premier ensemble de support (100) et le deuxième ensemble de support (200) le long de la première direction et rapprocher le troisième ensemble de support (300) du premier ensemble de support (100) et du deuxième ensemble de support (200) le long de la deuxième direction.

10. Procédé de traitement de cellule selon la revendication 9, dans lequel l'étape de rotation et de rapprochement comprend :
- maintenir le premier ensemble de support (100) et le deuxième ensemble de support (200) fixés au troisième ensemble de support (300) le long de la première direction lorsque le premier ensemble de support (100) tourne d'un premier angle de départ à un premier angle prédéfini et que le deuxième ensemble de support (200) tourne d'un deuxième angle de départ à un deuxième angle prédéfini ;
- déplacer la pièce de formage (320) loin du siège de support (310) ; et
- rapprocher le premier ensemble de support (100) et le deuxième ensemble de support (200) du troisième ensemble de support (300) le long de la première direction et rapprocher le troisième ensemble de support (300) du premier ensemble de support (100) et du deuxième ensemble de support (200) le long de la deuxième direction lorsque le premier ensemble de support (100) tourne du premier angle prédéfini au premier angle de pliage et que le deuxième ensemble de support (200) tourne du deuxième angle prédéfini au deuxième angle de pliage.

11. Ligne de production de batteries, comprenant l'équipement de traitement de cellule selon l'une des revendications 1 à 8.
